# FASCICULE DE BREVET EUROPEEN

(11) **EP 3 501 873 B1**
(45) Date de publication et mention de la délivrance du brevet: **22.06.2022**
(21) Numéro de dépôt: 18214925.2
(22) Date de dépôt: 20.12.2018
(51) Int. Cl.: B60K 35/00, B60R 16/02, B60W 40/00, G08G 1/16, G07C 5/00, G02B 27/01, G06F 3/01, B60R 16/023, G06F 3/0346, G06K 9/00, B60K 37/06

(54) **SYSTEME LUMINEUX POUR DISPOSITIF D'ECLAIRAGE ET/OU DE SIGNALISATION D'UN VEHICULE AUTOMOBILE**
LEUCHTSYSTEM FÜR VORRICHTUNG ZUR BELEUCHTUNG UND/ODER SIGNALISIERUNG FÜR KRAFTFAHRZEUG
LUMINOUS SYSTEM FOR A LIGHTING AND/OR SIGNALLING DEVICE OF A MOTOR VEHICLE

(30) Priorité: 20.12.2017 FR 1762596
(43) Date de publication de la demande: 26.06.2019
(73) Titulaire: Valeo Vision, 93012 Bobigny Cedex (FR)
(72) Inventeur: FLEURENCE, Thierry, 93012 BOBIGNY Cedex (FR); MEYRENAUD, Jean-Luc, 93012 BOBIGNY Cedex (FR)
(74) Mandataire: Valeo Visibility

(56) Documents cités:
- EP-A1- 3 045 996
- DE-A1-102014 221 608
- US-A1- 2015 246 639
- US-A1- 2017 123 503

## Description

L'invention concerne un système d'avertissement d'un conducteur de véhicule automobile.

Il existe des conditions de circulations d'un véhicule automobile qui nécessitent un système d'avertissement du conducteur du véhicule pour capter son attention de sorte à ce qu'il adapte son mode de circulation. C'est notamment le cas lorsque le véhicule se retrouve dans une situation dangereuse. Une situation dangereuse peut survenir par exemple lorsqu'il y a un changement brusque des conditions de circulation, lorsqu'il y a un ralentissement brutal de la circulation, lorsqu'un objet difficilement visible par le conducteur est présent sur la voie de circulation ou lorsque le conducteur souhaite changer de voie de circulation. Il est important pour la sécurité des passagers que le conducteur du véhicule détecte ces situations potentiellement dangereuses pour pouvoir intervenir si nécessaire. Le document US2017/123503 A1 présente l'état de la technique pertinent pour l'invention.

C'est également le cas lorsque le véhicule pénètre dans une zone requérant un mode de conduite particulier. Il existe ainsi des zones de circulation à vitesse réduite, nécessitant un ralentissement du véhicule, ou encore des zones de circulation dites restreintes, interdisant le passage de véhicules équipés de moteur thermique ou encore de système de circulation dit autonome.

Dans ce contexte, plusieurs systèmes existent et permettent d'aider le conducteur à être informé des conditions de circulation dans lesquelles il se trouve. Par exemple, le véhicule peut notamment être équipé d'une caméra qui capte des images de l'environnement dans lequel se trouve le véhicule et qui est reliée à un système permettant de transmettre ces images à un écran situé à proximité du tableau de bord.

Par ailleurs, dans le cas d'un changement de file de circulation, le conducteur doit regarder dans les rétroviseurs intérieurs et extérieurs au véhicule afin de savoir s'il peut se déporter en toute sécurité. Le conducteur doit en plus tourner la tête sur le côté où se situe la voie pour regarder en vision directe si un véhicule ne se situe pas dans la zone qui n'est pas visible dans les rétroviseurs, appelée zone d'angle mort ou angle mort.

Ainsi, dans tous les dispositifs connus, le conducteur est obligé d'arrêter de regarder la route afin de pouvoir regarder sur le tableau de bord, dans les rétroviseurs ou sur le côté en vision directe. Il est donc obligé de déporter son attention de la route et d'orienter son regard dans la direction du dispositif pour avoir accès à l'information. Or, il peut arriver que le conducteur ne pense pas à déporter son regard, notamment dans le cas de conditions de circulation nécessitant une grande concentration de la part du conducteur ou encore dans le cas d'un véhicule dit autonome dans lequel le conducteur peut détacher son attention de la conduite. Le changement de conditions de circulation est donc détecté trop tard par le conducteur, voire n'est pas du tout détecté, ce qui pose un problème de sécurité.

Un but de l'invention est donc de fournir un système d'avertissement d'un conducteur de véhicule permettant de diminuer le temps de réponse d'un conducteur face à un changement de conditions de circulation nécessitant son attention immédiate.

A cet effet, on prévoit selon l'invention un système d'avertissement d'un conducteur d'un véhicule d'un événement dans l'environnement du véhicule, comprenant :
- un système de détection apte à détecter un événement intervenant dans l'environnement du véhicule ;
- un dispositif d'avertissement destiné à être porté par le conducteur et connecté au système de détection ;
le dispositif d'avertissement étant agencé pour transmettre un signal d'avertissement au conducteur lorsqu'un événement est détecté par le système de détection.

Un tel système d'avertissement permet d'avertir le conducteur d'un changement des conditions de circulation immédiatement et à tout moment, puisque le dispositif d'avertissement est porté par le conducteur. Il est donc suffisamment proche du conducteur pour que celui-ci puisse être averti dès le changement de conditions de circulation de sorte à pouvoir adapter la conduite du véhicule de façon immédiate.

Le système de détection peut être positionné à l'extérieur de l'habitacle du véhicule. Il peut par exemple être positionné dans un rétroviseur extérieur du véhicule. Alternativement, le système de détection est positionné à l'intérieur de l'habitacle du véhicule. Par exemple, il peut être positionné dans un projecteur ou dans un feu arrière du véhicule ou encore dans un rétroviseur intérieur du véhicule.

Le système de détection peut être un capteur ultrasons. Par exemple, le système de détection est un système Lidar. Alternativement, le système de détection est un système apte à recevoir un signal émis par un véhicule en circulation dans l'environnement du véhicule. Selon une variante, le système de détection est un système apte à recevoir un signal d'une infrastructure par l'intermédiaire d'une liaison Wifi, Wimax, 3G ou 4G. En variante encore, le système de détection peut être une caméra. En variante encore, le système de détection peut être une combinaison de plusieurs des systèmes de détection cités ci-dessus, identiques ou distincts.

Avantageusement, le dispositif d'avertissement comprend une source de lumière agencée pour transmettre ledit signal d'avertissement sous la forme d'un signal lumineux visible par le conducteur. La source de lumière peut être une source de lumière monochromatique, par exemple rouge. Alternativement, la source de lumière comporte une pluralité d'émetteurs monochromatiques activables sélectivement et émettant à des longueurs d'ondes différentes. En particulier, la source de lumière peut être une source à semi-conducteur émettrice de lumière. Avantageusement, la source de lumière peut être une diode électroluminescente (LED).

Alternativement, le dispositif d'avertissement comprend un haut parleur agencé pour transmettre ledit signal d'avertissement sous la forme d'un signal sonore audible par le conducteur.

Alternativement, le dispositif d'avertissement est apte à transmettre ledit signal d'avertissement sous la forme de vibrations perceptibles par le conducteur. Par exemple, le dispositif d'avertissement comprend un système piézoélectrique.

Si on le souhaite, le dispositif d'avertissement peut être apte à transmettre plusieurs types de signaux d'avertissement, notamment de façon simultanée, parmi ceux cités ci-dessus.

Avantageusement, le dispositif d'avertissement est agencé pour transmettre le signal d'avertissement pendant une durée déterminée, ladite durée déterminée correspondant au temps entre la détection de l'événement par le système de détection et la détection d'une disparition ou d'une évolution dudit événement par le système de détection. Le conducteur est ainsi informé pendant toute la durée de la présence de l'événement.

Selon une variante, le dispositif d'avertissement est agencé pour que le signal d'avertissement soit un signal de fréquence nulle. Il peut par exemple consisté en l'activation de la source de lumière, du haut parleur ou des vibrations.

Selon une autre variante, le dispositif d'avertissement est agencé pour que le signal d'avertissement soit un signal de fréquence non nulle. Le signal d'avertissement peut alors être un signal périodique de fréquence fixe, ou un signal apériodique évolutif.

Avantageusement, le dispositif d'avertissement est agencé pour modifier une ou plusieurs caractéristiques du signal d'avertissement pendant ladite durée déterminée. Le dispositif d'avertissement peut modifier la longueur d'onde émise par la source de lumière, la fréquence du signal sonore émis par le haut parleur, l'intensité du signal ou la fréquence du signal.

Avantageusement, le dispositif d'avertissement est agencé pour modifier la ou les caractéristiques du signal d'avertissement le long de ladite durée prédéterminée en fonction d'une détection d'une évolution de l'événement au cours de ladite durée déterminée par le système de détection. Le dispositif d'avertissement peut ainsi adapter les caractéristiques du signal en fonction de la dangerosité de l'événement ou encore en fonction de sa proximité avec le véhicule, de sorte à ce que le conducteur puisse anticiper cet événement en adaptant sa conduite de façon progressive.

Préférentiellement, le dispositif d'avertissement est agencé pour transmettre ledit signal d'avertissement au conducteur lorsqu'un événement nécessitant l'attention du conducteur est détecté par le système de détection. Par exemple, un événement nécessitant une modification ou une adaptation de la conduite du véhicule par le conducteur, comme par exemple la direction ou la vitesse du véhicule, en fonction dudit événement.

Avantageusement, le dispositif d'avertissement est agencé pour transmettre ledit signal d'avertissement d'un côté du conducteur correspondant à la position dudit événement par rapport au conducteur. Le conducteur est ainsi directement averti de la position de l'événement par rapport à lui-même.

Selon une variante, le dispositif d'avertissement est agencé pour transmettre ledit signal d'avertissement au conducteur lorsque la présence d'un véhicule dans une zone d'angle mort du conducteur est détectée par le système de détection.

Avantageusement, le dispositif d'avertissement est agencé pour transmettre un premier signal d'avertissement donné lorsque le système de détection ne détecte aucun véhicule dans la zone d'angle mort du conducteur, un deuxième signal d'avertissement donné lorsque le système de détection détecte un véhicule a proximité de la zone d'angle mort du conducteur, c'est-à-dire lorsque le véhicule est visible dans un rétroviseur extérieur, par exemple lorsque le véhicule se situe à moins de 10 mètres de la zone d'angle mort, notamment moins de 5 mètres, un troisième signal d'avertissement donné lorsque le système de détection détecte un véhicule dans la zone d'angle mort du conducteur. Par exemple, le premier signal d'avertissement peut être un signal lumineux de couleur verte, le deuxième signal d'avertissement peut être un signal lumineux de couleur orange et le troisième signal d'avertissement peut être un signal lumineux de couleur rouge. Le dispositif d'avertissement avertit donc dans ce cas le conducteur de l'arrivée et de la disparition du danger, à savoir un véhicule dépassant non visible, de façon simple et immédiatement compréhensible.

Alternativement, aucun signal d'avertissement n'est émis lorsque le système de détection ne détecte aucun véhicule dans la zone d'angle mort du conducteur.

Avantageusement, le signal d'avertissement est transmis au conducteur lorsque la présence d'un danger, un changement des conditions de conduite, un ralentissement de la circulation, un obstacle sur la route, un péage ou la présence d'un feu de signalisation est détecté par le système de détection.

Selon une autre variante, le véhicule est équipé d'un système d'analyse de l'environnement agencé pour que ledit véhicule soit apte à circuler au moins partiellement sans action du conducteur dans un mode de conduite, appelé mode autonome. Préférentiellement, le système de détection comprend le système d'analyse de l'environnement. Il peut notamment s'agir entre autre d'un ensemble de capteurs de type LIDAR, RADAR, caméra, capteur infrarouge, permettant au véhicule d'appréhender la scène de route de sorte à pouvoir y circuler seul sans intervention du conducteur, en adaptant de façon autonome et dynamique sa vitesse et sa trajectoire.

Avantageusement, le dispositif d'avertissement est agencé pour transmettre ledit signal d'avertissement au conducteur lorsque celui-ci doit entreprendre une action de reprise de commandes du véhicule, le véhicule circulant alors dans un mode de conduite, appelé mode manuel. Par exemple, le dispositif d'avertissement est agencé pour transmettre ledit signal d'avertissement au conducteur lorsque le véhicule en mode autonome entre dans une zone interdisant la circulation de véhicule en mode autonome. Dans ce cas, le dispositif transmet donc au conducteur une information lui indiquant qu'il est nécessaire d'arrêter le mode de conduite autonome et de reprendre un mode de conduite manuelle.

Avantageusement, le dispositif d'avertissement est apte à communiquer avec le véhicule par une liaison sans fil. La liaison sans fil peut être une liaison bluetooth, wifi, lifi ou radio. Il est ainsi possible au conducteur de porter ledit dispositif d'avertissement sans que ses mouvements soient gênés par des câbles.

Préférentiellement, le véhicule et le dispositif d'avertissement comportent des moyens d'émission et de réception de signaux pour réaliser la liaison sans fil. Alternativement, le dispositif d'avertissement est apte à communiquer avec le véhicule par une liaison filaire.

Dans un premier exemple qui ne fait pas partie de l'objet de l'invention, le dispositif d'avertissement est un bracelet ou une montre. Dans cet exemple, il peut être avantageux que le signal d'avertissement soit un signal vibratoire, facilement perceptible via le poignet du conducteur.

Dans un deuxième exemple qui ne fait pas partie de l'objet de l'invention, le dispositif d'avertissement sont des écouteurs. Dans cet exemple, il peut être avantageux que le signal d'avertissement soit un signal sonore, immédiatement perceptible via les conduits auditifs du conducteur.

Dans un troisième exemple qui ne fait pas partie de l'objet de l'invention, le dispositif d'avertissement est un casque de moto. Par exemple, le casque de moto comporte une visière et une source de lumière apte à émettre de la lumière vers la visière. Dans ce cas, le signal d'avertissement consiste en un signal lumineux immédiatement perceptible par le conducteur, dont le champ de vision englobe cette visière.

Dans un quatrième exemple qui ne fait pas partie de l'objet de l'invention, le dispositif d'avertissement est une paire de lunettes. Dans cet exemple, il peut être avantageux que le signal d'avertissement soit un signal lumineux, immédiatement perceptible via les yeux du conducteur.

Avantageusement, la paire de lunettes comporte des moyens d'avertissement pour transmettre ledit signal d'avertissement au conducteur, lesdits moyens d'avertissement étant positionnés sur au moins une branche de la paire de lunettes et/ou sur la monture centrale de la paire de lunettes.

Préférentiellement, les moyens d'avertissement comportent une première source latérale de lumière, portée par ladite branche pour émettre le signal lumineux d'avertissement,

La première source latérale de lumière est configurée pour éclairer au moins une partie d'un verre, dite portion latérale. Le signal lumineux est dans ce cas avantageusement projeté ou diffusé sur ce verre de sorte à être immédiatement visible par le conducteur.

Avantageusement, les moyens d'avertissement comportent une deuxième source latérale de lumière portée par l'autre branche de la paire de lunettes pour émettre un signal lumineux d'avertissement, et configurée pour éclairer au moins une partie de l'autre verre. Cette caractéristique permet d'éclairer l'ensemble des verres de sorte à ce que les deux yeux du conducteur captent le signal.

Avantageusement, les moyens d'avertissement comportent une source centrale de lumière, portée par la monture centrale pour émettre le signal lumineux d'avertissement. La source centrale de lumière est configurée pour éclairer au moins une partie d'un verre, dite partie centrale. Cette caractéristique offre l'avantage de pouvoir éclairer la totalité du verre tout en permettant de modifier la taille de la surface éclairée (par allumage ou extinction de la source centrale et/ou de la ou des sources latérales) de façon à adapter le signal en fonction de l'événement et par exemple de sa proximité par rapport au véhicule.

Préférentiellement, la première source latérale de lumière et la source centrale de lumière sont aptes à éclairer le même verre, la partie latérale étant distincte de la partie centrale.

Avantageusement, le (ou les) verre(s) éclairé(s) comporte une face de couplage et une face de découplage, le verre étant agencé pour guider la lumière émise par la première source latérale de lumière et/ou la deuxième source latérale de lumière et/ou la source centrale de lumière depuis la face de couplage vers la face de découplage.

Préférentiellement, la face de découplage comporte des moyens de découplage apte à diffuser la lumière vers au moins un œil du conducteur. Les moyens de découplage comprennent un revêtement ou une texturation de surface. Dans ce mode de réalisation, la lumière est donc avantageusement diffusée par le verre lui-même, ce qui permet d'éviter un éblouissement du conducteur.

Avantageusement, le verre est agencé pour réfléchir la lumière émise par la première source latérale de lumière et/ou la deuxième source latérale de lumière et/ou la source centrale de lumière vers au moins un œil du conducteur. Dans ce mode de réalisation, la lumière est avantageusement réfléchie par le verre, ce qui permet d'obtenir un signal d'avertissement lumineux de plus grande intensité.

Alternativement, la première source latérale de lumière, et le cas échéant, la deuxième source latérale de lumière et/ou la source centrale de lumière sont agencées pour éclairer directement vers au moins un œil du conducteur. Par directement, on entend que les lunettes ne sont pas utilisées comme un dioptre. La lumière émise atteint donc l'œil du conducteur sans être déviée par les lunettes. En revanche, il est possible d'utiliser un réflecteur pour orienter la lumière vers au moins un œil du conducteur.

Selon l'invention, le dispositif d'avertissement comprend des moyens agencés pour être montés, de façon réversible, sur un objet porté par le conducteur. Cette caractéristique permet ainsi au conducteur de fixer ou non, selon ses besoins, le dispositif d'avertissement à un objet qu'il porte sur lui au quotidien.

Dans une première variante, le dispositif d'avertissement comprend des moyens de fixation élastique sur une paire de lunettes. Par exemple, un boîtier comprenant une source de lumière est attaché aux moyens élastiques de sorte que la source de lumière soit positionnée pour émettre de la lumière en direction d'un verre de la paire de lunettes pour y être réfléchie vers un œil du conducteur.

Dans une deuxième variante, le dispositif d'avertissement comprend des moyens de fixation adhésive sur une visière d'un casque.

D'autres caractéristiques et avantages de la présente invention apparaitront plus clairement à l'aide de la description et des dessins parmi lesquels :
- la figure 1a représente schématiquement en vue de haut une situation de conduite où un véhicule est présent dans la zone d'angle mort du conducteur ;
- la figure 1b représente schématiquement en vue de haut une situation de conduite où un ralentissement de la circulation a lieu ;
- la figure 1c représente schématiquement une situation de conduite en vue de haut où un véhicule entre dans une zone interdisant la circulation de véhicule en mode autonome ;
- la figure 2 représente un véhicule équipé d'un système de détection
- la figure 3a représente un casque de moto utilisé comme système d'avertissement qui ne fait pas partie de l'objet de l'invention
- la figure 3b représente une paire de lunettes utilisée comme système d'avertissement exemple qui ne fait pas partie de l'objet de l'invention
- la figure 4a représente un premier mode de réalisation d'un moyen de fixation agencé pour être monté sur un objet porté par le conducteur
- la figure 4b représente un deuxième mode de réalisation d'un moyen de fixation agencé pour être monté sur un objet porté par le conducteur

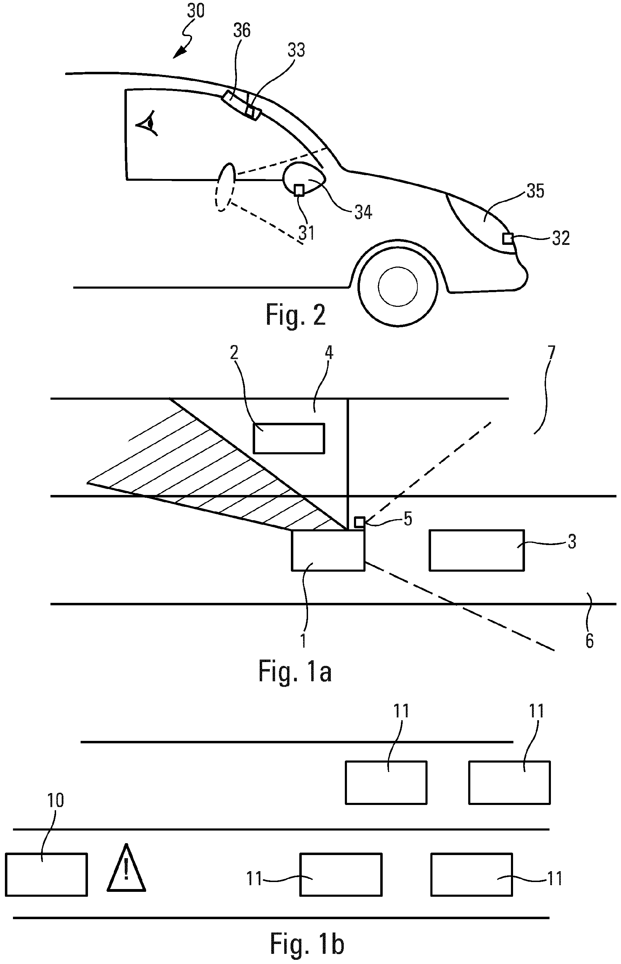

On a illustré sur la figure 1a une première situation de conduite où un événement nécessite l'attention du conducteur du véhicule 1. En effet, le conducteur du véhicule 1, qui circule dans la file de circulation lente 6, a enclenché son clignotant 5 indiquant qu'il souhaite changer de file de circulation afin de pouvoir dépasser le véhicule avant 3. Pour pouvoir effectuer son dépassement en toute sécurité, le conducteur du véhicule 1 doit penser à réaliser plusieurs contrôles. Il doit tout d'abord regarder dans les rétroviseurs intérieurs et extérieurs de son véhicule 1 puis, il doit tourner la tête et regarder directement la file de circulation rapide 7 dans laquelle il veut s'insérer afin de voir si un véhicule se trouve ou non dans sa zone d'angle mort 4. Si le conducteur du véhicule 1 n'effectue pas tous ces contrôles, il ne pourra pas voir le véhicule latéral 2 qui se trouve sur la file de circulation rapide 7, dans sa zone d'angle mort 4. Il se déportera et entrera en collision avec le véhicule latéral 2. Dans cette situation de conduite, il est donc important que le conducteur du véhicule 1 soit averti de la présence du véhicule latéral 2 lui interdisant tout dépassement. Le conducteur du véhicule 1 doit donc adapter sa vitesse pour ne pas entrer en collision avec le véhicule avant 3 tant que le véhicule latéral 2 ne l'a pas dépassé.

La figure 1b illustre une deuxième situation de conduite où un événement nécessite l'attention du conducteur. Dans cette situation, les véhicules avant 11 sont pris dans un embouteillage. Ils circulent selon des vitesses lentes, et peuvent même être à l'arrêt. Le véhicule 10 circule à une allure plus élevée. Dès que le conducteur du véhicule 10 va voir l'embouteillage, il va devoir adapter son allure. Il est important que le conducteur du véhicule 10 soit informé le plus tôt possible du ralentissement afin de pouvoir ralentir progressivement et éviter de freiner brusquement, ce qui pourrait être dangereux dans le cas où d'autres véhicules se situeraient derrière lui.

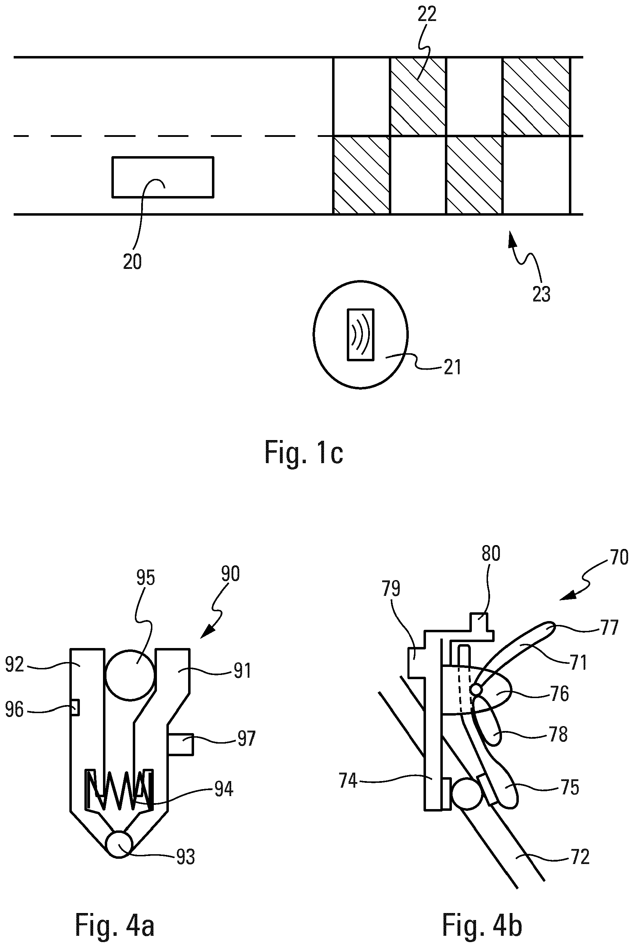

La figure 1c illustre une troisième situation de conduite où un événement nécessite l'attention du conducteur. Dans cet exemple, le véhicule 20 est équipé d'un système d'analyse de l'environnement agencé pour que ledit véhicule soit apte à circuler au moins partiellement sans action du conducteur dans un mode de conduite autonome. Le véhicule 20 arrive dans une zone de circulation 23 interdisant la circulation en mode autonome, par exemple du fait de la présence d'une zone piétonne à proximité de la zone 23. Cette interdiction de circuler en mode autonome est matérialisée ici par la présence d'un panneau 21 et par la présence d'un damier 22 dessiné sur la route à l'entrée de la zone 23. Le conducteur du véhicule 20, lorsque le véhicule 20 est en mode autonome, peut ne pas regarder la route. Il est donc possible qu'il ne voit pas le panneau 21 ou le damier 22. Il doit donc être averti par un système d'avertissement adéquat qu'il doit réaliser une action de reprise de commandes du véhicule 20 pour circuler dans un mode de conduite manuel.

La figure 2 représente un véhicule 30 équipé d'un système de détection permettant de répondre aux différentes situations de conduite exposées ci-dessus en détectant ces situations et en transmettant au conducteur du véhicule 30 un avertissement relatif à cet événement. On a représenté sur cette figure 2 plusieurs systèmes de détection sur le même véhicule 30, à savoir un système 31 de type capteur à ultrason installé dans un rétroviseur extérieur du véhicule 30, un système 32 de type télédétection par laser ou LIDAR installé dans un projecteur avant du véhicule 30 ; et une caméra 33 installée dans un rétroviseur intérieur du véhicule 30. Le système de détection dans le système d'avertissement selon l'invention peut comprendre l'un ou plusieurs de ces systèmes de détection 31, 32, 33, la multiplication de ces systèmes permettant d'introduire de la redondance et donc d'améliorer la fiabilité de la détection. Le système de détection 31 peut être positionné à l'extérieur du véhicule 30, dans un rétroviseur extérieur 34. Le système de détection peut également être positionné à l'intérieur de l'habitacle du véhicule 30. Dans un premier exemple, le système de détection 32 est positionné dans un projecteur avant 35. Dans un deuxième exemple, le système de détection 33 est positionné dans le rétroviseur intérieur 36 du véhicule 30.

Plusieurs systèmes de détection 31, 32, 33 peuvent être utilisés dans le cadre de l'invention. Le système de détection 31, 32, 33 peut être un capteur ultrasons. Il peut également être un système recevant des signaux émis par les véhicules circulant dans son environnement ou émis par des infrastructures présentes dans son environnement. En variante, le système de détection 31, 32, 33 peut être une caméra. Le système de détection 31, 32, 33 comporte alors des moyens de réception de ces signaux émis par les véhicules circulant dans son environnement ou émis par des infrastructures.

Une fois que le système de détection 31, 32, 33 a détecté un événement nécessitant l'attention du conducteur intervenant dans l'environnement du véhicule, tel que par exemple représenté sur l'une des figures 1a, 1b et 1c, le dispositif d'avertissement transmet un signal d'avertissement au conducteur.

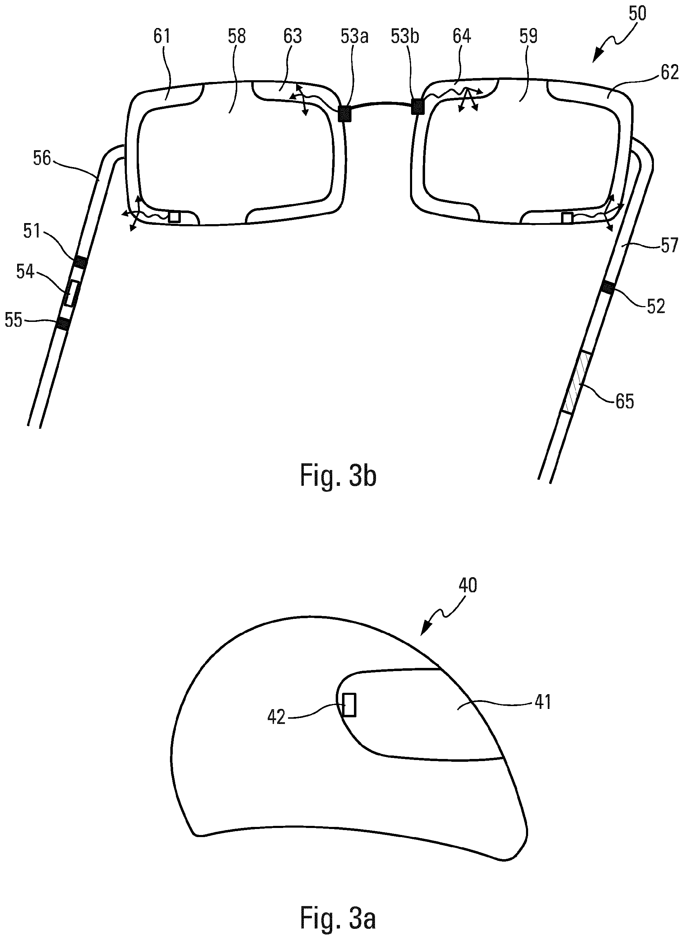

Le dispositif d'avertissement peut prendre différentes formes. Non conforme à l'invention, il peut s'agir d'un bracelet ou d'une montre, d'écouteurs, d'un casque de moto 40, comme représenté à la figure 3a ou d'une paire de lunettes 50 comme présentée à la figure 3b. Et le signal d'avertissement transmis par le système d'avertissement peut être un signal lumineux visible par le conducteur, un signal sonore audible par le conducteur ou un signal d'avertissement sous la forme de vibrations perceptibles par le conducteur.

Par exemple, comme illustré en figure 3a, le casque de moto 40 comporte une visière 41 et une source de lumière 42 émettant de la lumière et qui transmet le signal d'avertissement sous la forme d'un signal lumineux.

Selon un autre exemple non conforme à l'invention illustré en figure 3b, la paire de lunettes 50 peut comporter seuls ou en combinaison, un haut parleur 54 qui peut transmettre un signal sonore audible par le conducteur et/ou un système piézoélectrique 55 qui peut transmettre un signal d'avertissement sous la forme de vibrations perceptibles par le conducteur et/ou des source de lumière décrites ci-après qui peuvent transmettre un signal lumineux visible par le conducteur.

Afin de transmettre un signal lumineux, la paire de lunettes 50 comporte une première source latérale de lumière 51 positionnée sur une branche 56 et une deuxième source latérale de lumière 52 positionnée sur l'autre branche 57. La première source latérale de lumière 51 éclaire une partie latérale 61 du verre 58. La deuxième source latérale de lumière 52 éclaire une partie latérale 62 du verre 59. La paire de lunettes 50 comporte également une première source centrale de lumière 53a qui éclaire une partie centrale 63 du verre 58 et une deuxième source centrale de lumière 53b qui éclaire une partie centrale 64 du verre 59.

Les verres 57 et 58 guident la lumière émise par les sources de lumière 51, 52, 53a, 53b depuis une face de couplage vers une face de découplage comportant un revêtement ou une texturation de surface qui diffuse la lumière vers au moins un œil du conducteur.

Le signal d'avertissement est un signal lumineux transmis par les sources de lumière 51, 52, 53a, 53b. Il est transmis pendant une durée déterminée qui correspond au temps entre la détection de l'événement par le système de détection 31, 32, 33 et la détection de la disparition ou de l'évolution de l'événement par le système de détection 31, 32, 33.

Les sources de lumière 51, 52, 53a, 53b peuvent être des sources de lumière monochromatiques, par exemple rouge et le signal transmis peut alors être un signal de fréquence nulle et consister en l'activation des sources de lumière 51, 52, 53a, 53b. Il peut également être un signal de fréquence non nulle et consister en une succession d'activations et de désactivations simultanées des sources 51, 52, 53a, 53b de sorte à former un clignotement qui peut s'accélérer lorsque le danger ou l'imminence d'une action à entreprendre par le conducteur approche, pendant la durée déterminée.

Par exemple, dans le cas où la présence d'un véhicule dans la zone d'angle mort du conducteur est détectée par le système de détection 31, 32, 33, les sources de lumière 51, 52, 53a, 53b peuvent être activées pour signaler au conducteur qu'il ne peut pas s'insérer dans la file dans laquelle se situe le véhicule détecté. Il est également possible que les sources 51, 52, 53a, 53b clignotent pour signaler la proximité du véhicule détecté au conducteur.

Dans le cas où le véhicule circule dans un mode autonome, les sources de lumière 51, 52, 53a, 53b peuvent être activées lorsque le système de détection 31, 32, 33 détecte que le véhicule approche d'une zone interdisant la circulation de véhicule en mode autonome. Il est également possible que les sources 51, 52, 53a, 53b clignotent pour signaler au conducteur l'imminence de passer en mode manuel.

Les sources de lumière 51, 52, 53a, 53b peuvent être activées pour tout événement nécessitant l'attention du conducteur tel qu'un changement des conditions de conduite, un ralentissement de la circulation, un obstacle sur la route, un péage ou la présence d'un feu de signalisation.

Alternativement, les sources de lumière 51, 52, 53a, 53b peuvent comporter une pluralité d'émetteurs monochromatiques activables sélectivement et émettant à des longueurs d'onde différentes. Le signal d'avertissement peut alors être un signal de fréquence non nulle. Le signal d'avertissement peut évoluer à mesure que le danger ou l'imminence d'une action à entreprendre par le conducteur approche.

Par exemple, lorsque le véhicule circule, un signal lumineux de lumière verte peut être émis par les sources de lumière 51, 52, 53a, 53b lorsqu'aucun véhicule n'est détecté par le système de détection 31, 32, 33 proche de la zone d'angle mort du conducteur ou dans la zone d'angle mort du conducteur. Un signal lumineux de couleur orange peut être émis par les sources de lumière 51, 52, 53a, 53b lorsqu'un véhicule est détecté par le système de détection 31, 32, 33, à proximité de la zone d'angle mort du conducteur, par exemple lorsque le véhicule est situé à moins de 5 mètres de la zone d'angle mort. Et, un signal lumineux de couleur rouge peut être émis par les sources de lumière 51, 52, 53a, 53b lorsqu'un véhicule est détecté par le système de détection 31, 32, 33 dans la zone d'angle mort du conducteur. Le conducteur est alors informé quand il devient dangereux d'effectuer un dépassement grâce au changement de couleur des sources de lumière 51, 52, 53a, 53b.

Il est également possible que les sources de lumière 51, 52, 53a, 53b n'émettent pas de lumière lorsqu'aucun véhicule à proximité de la zone d'angle mort du conducteur ou dans la zone d'angle mort du conducteur n'est détecté par le système de détection 31, 32, 33. Les sources de lumière 51, 52, 53a, 53b n'émettent alors de la lumière que lorsque le danger est proche.

Dans le cas où le véhicule circule dans un mode autonome, les sources de lumière 51, 52, 53a, 53b peuvent émettre un signal lumineux de couleur verte tant que le véhicule peut être en mode autonome, un signal lumineux de couleur orange lorsque le véhicule s'approche de un événement nécessitant de circuler en mode manuel est détecté indiquant que le conducteur doit se préparer activement à entreprendre une action de reprise de commandes du véhicule, un signal lumineux de couleur rouge lorsque le véhicule doit obligatoirement être en mode manuel.

De plus, le signal lumineux peut être transmis du côté du conducteur correspondant à la position de l'événement par rapport au conducteur. Ainsi, lorsqu'un véhicule est présent dans la zone d'angle mort du conducteur, seul le verre se trouvant du côté du véhicule se trouvant dans la zone d'angle mort peut être éclairé. Lorsque le véhicule se trouvant dans la zone d'angle mort est à la gauche du conducteur, seule la partie latérale 61 du verre 58 est éclairée et optionnellement la partie centrale 63 du verre 58 est éclairée. Le conducteur peut alors savoir immédiatement de quelle direction provient le danger.

Pour que l'information captée par le système de détection 31, 32, 33 soit transmise à la paire de lunettes 50, celle-ci est équipée d'un moyen de réception 65 des signaux qui sont émis par des moyens d'émission du système de détection 31, 32, 33 de sorte que la paire de lunettes 50 communique avec le système de détection 31, 32, 33 par une liaison sans fil, notamment par une liaison bluetooth ou wifi. Alternativement, les signaux émis par les moyens d'émission 65 du système de détection 31, 32, 33 peuvent être envoyés au véhicule 30 et le véhicule 30 peut à son tour transmettre ces signaux au système de détection 31, 32, 33 par une liaison sans fil.

Selon l'invention, le dispositif d'avertissement 40, 50 comprend des moyens montés de façon réversible sur un objet porté par le conducteur.

La figure 4a représente un premier mode de réalisation d'un moyen de fixation prenant la forme d'un moyen de fixation à ressort 90 pouvant par exemple être fixé sur une paire de lunettes représentée sur cette figure par une branche 95.

Le moyen de fixation à ressort 90 comporte une première patte mobile 91 et une deuxième patte mobile 92 articulées par l'intermédiaire de l'articulation 93. Un ressort 94 relie également les deux pattes mobiles 91, 92. Le ressort est comprimé et exerce une force de rappel entre les deux pattes mobiles 91, 92 de sorte que les pattes mobiles 91, 92 soient attirées l'une contre l'autre. Lorsqu'une force opposée à la force de rappel est exercée, un espace entre les pattes mobiles 91, 92 est formé. Un objet tel qu'une branche 95 d'une paire de lunettes peut alors être positionnée entre les pattes mobiles 91, 92. Lorsque la force opposée à la force de rappel n'est plus exercée, les pattes mobiles 91, 92 se referme autour de la branche 95 positionné entre les pattes 91, 92, de sorte à ce qu'il soit enserré. Le moyen de fixation à ressort est alors fixé sur la branche 95 de la paire de lunettes.

Un récepteur 97 est également attaché au moyen de fixation à ressort 90. Le récepteur 97 peut recevoir les informations détectées et transmises par le système de détection 31, 32, 33 afin de pourvoir déclencher l'activation d'une source de lumière 96 attachée au moyen de fixation à ressort 90. La source de lumière 96 est attachée au moyen de fixation à ressort 90 de sorte que lorsque le moyen de fixation à ressort 90 est fixé sur la branche 95 de la paire de lunettes, la source de lumière 96 émet de la lumière en direction d'un verre de la paire de lunettes pour y être réfléchie vers un œil du conducteur. La source de lumière n'a alors plus besoin d'être fixée au préalable à la branche de lunettes. La lumière émise par la source de lumière 96 est alors visible instantanément par le conducteur. Celui-ci peut alors réagir dès qu'un changement des conditions de circulation nécessitant l'attention immédiate du conducteur est détecté.

La figure 4b représente un deuxième mode de réalisation d'un moyen de fixation prenant la forme d'un moyen de fixation élastique 70 pouvant par exemple être fixé sur une paire de lunettes représentée sur cette figure par une branche 72.

Le moyen de fixation élastique 70 comporte une patte fixe 74 et une patte mobile 75 reliées par un élément d'attache 76 et un levier 71. L'élément d'attache 76 est issue de la patte fixe 74 à l'une de ses extrémités et permet de venir fixer la patte mobile 75 en face de la patte fixe 74 à l'une de ses extrémités. Le levier 71 est également rattaché au moyen de fixation par l'intermédiaire de l'élément d'attache 76. Il est mobile entre deux positions. Une position desserrée comme représentée sur la figure 4b permettant d'éloigner la patte fixe 74 et la patte mobile 75 et de positionner ainsi la branche 72 entre ces deux pattes 74, 75 et une position resserrée où la patte fixe 74 et la patte mobile 75 viennent enserrer la branche 72. L'extrémité de contact 78 du levier 71, opposée à l'extrémité libre 77 est en contact avec une des pattes. Le levier 71 passe de la position desserrée à la position resserrée lorsqu'une force est appliquée à son extrémité libre 77, l'extrémité de contact 78 vient alors appuyer contre la patte mobile 75 qui vient alors enserrer la branche 72 en coopération avec la patte fixe 74.

Un récepteur 80 est également attaché au moyen de fixation élastique 70. Le récepteur 80 peut alors recevoir les informations détectées et transmises par le système de détection 31, 32, 33 afin de pouvoir déclencher l'activation d'une source de lumière 79 attachée au moyen de fixation élastique 70. La source de lumière 79 est attachée au moyen de fixation élastique 70 de sorte que lorsque le moyen de fixation élastique est fixé sur la branche 72 de la paire de lunettes, la source de lumière 79 émet de la lumière en direction d'un verre de la paire de lunettes pour y être réfléchie vers un œil du conducteur. La source de lumière n'a alors plus besoin d'être fixée au préalable à la branche de lunettes. La lumière émise par la source de lumière 79 est alors visible instantanément par le conducteur. Celui-ci peut alors réagir dès qu'un changement des conditions de circulation nécessitant l'attention immédiate du conducteur est détecté.

## Revendications

1. Système d'avertissement d'un conducteur d'un véhicule (30) d'un événement dans l'environnement du véhicule, comprenant :
un système de détection (31 ; 32 ; 33) apte à détecter un événement intervenant dans l'environnement du véhicule (30) ;
un dispositif d'avertissement (40 ; 50) destiné à être porté par le conducteur et connecté au système de détection (31 ; 32 ; 33) ; dispositif d'avertissement (40 ; 50) étant agencé pour transmettre un signal d'avertissement au conducteur lorsqu'un événement est détecté par le système de détection (31 ; 32 ; 33) ; **caractérisé en ce que** le dispositif d'avertissement (40; 50) comprend des moyens (70 ; 90) agencés pour être monté, de façon réversible, sur un objet porté par le conducteur.

2. Système d'avertissement d'un conducteur d'un véhicule (30) selon la revendication précédente, **caractérisé en ce que** le dispositif d'avertissement (40 ; 50) comprend une source de lumière (42 ; 51, 52, 53a, 53b) agencée pour transmettre ledit signal d'avertissement sous la forme d'un signal lumineux visible par le conducteur.

3. Système d'avertissement d'un conducteur d'un véhicule (30) selon la revendication 1, **caractérisé en ce que** le dispositif d'avertissement (40 ; 50) comprend un haut parleur (54) agencé pour transmettre ledit signal d'avertissement sous la forme d'un signal sonore audible par le conducteur.

4. Système d'avertissement d'un conducteur d'un véhicule (30) selon la revendication 1, **caractérisé en ce que** le dispositif d'avertissement (40 ; 50) est apte à transmettre ledit signal d'avertissement sous la forme de vibrations perceptibles par le conducteur.

5. Système d'avertissement d'un conducteur d'un véhicule (30) selon l'une des revendications précédentes, **caractérisé en ce que** dispositif d'avertissement (40 ; 50) est agencé pour transmettre le signal d'avertissement pendant une durée déterminée, ladite durée déterminée correspondant au temps entre la détection de l'événement par le système de détection (31 ; 32 ; 33) et la détection d'une disparition ou d'une évolution dudit événement par le système de détection (31 ; 32 ; 33).

6. Système d'avertissement d'un conducteur d'un véhicule (30) selon la revendication précédente, **caractérisé en ce que** le dispositif d'avertissement (40 ; 50) est agencé pour modifier la ou les caractéristiques du signal d'avertissement le long de ladite durée prédéterminée en fonction d'une détection d'une évolution de l'événement au cours de ladite durée déterminée par le système de détection (31 ; 32 ; 33).

7. Système d'avertissement d'un conducteur d'un véhicule (30) selon l'une des revendications précédentes, **caractérisé en ce que** le dispositif d'avertissement (40 ; 50) est agencé pour transmettre ledit signal d'avertissement au conducteur lorsqu'un événement nécessitant l'attention du conducteur est détecté par le système de détection (31 ; 32 ; 33).

8. Système d'avertissement d'un conducteur d'un véhicule (30) selon la revendication précédente **caractérisé en ce que** le dispositif d'avertissement (40 ; 50) est agencé pour transmettre ledit signal d'avertissement au conducteur lorsque la présence d'un véhicule dans une zone d'angle mort du conducteur est détectée par le système de détection (31 ; 32 ; 33).

9. Système d'avertissement d'un conducteur d'un véhicule (30) selon la revendication précédente, **caractérisé en ce que** le dispositif d'avertissement (40 ; 50) est agencé pour transmettre un premier signal d'avertissement donné lorsque le système de détection (31 ; 32 ; 33) ne détecte aucun véhicule dans la zone d'angle mort du conducteur, un deuxième signal d'avertissement donné lorsque le système de détection (31 ; 32 ; 33) détecte un véhicule à proximité de la zone d'angle mort du conducteur, un troisième signal d'avertissement donné lorsque le système de détection (31 ; 32 ; 33) détecte un véhicule dans la zone d'angle mort du conducteur.

10. Système d'avertissement d'un conducteur d'un véhicule (30) selon la revendication 7, **caractérisé en ce que** le signal d'avertissement est transmis au conducteur lorsque la présence d'un danger, un changement des conditions de conduite, un ralentissement de la circulation, un obstacle sur la route, un péage ou la présence d'un feu de signalisation est détecté par le système de détection (31 ; 32 ; 33).

11. Système d'avertissement d'un conducteur d'un véhicule (30) selon la revendication 7, **caractérisé en ce que** le véhicule (30) est équipé d'un système d'analyse de l'environnement agencé pour que ledit véhicule soit apte à circuler au moins partiellement sans action du conducteur dans un mode de conduite, appelé mode autonome et **en ce que** le dispositif d'avertissement (40 ; 50) est agencé pour transmettre ledit signal d'avertissement au conducteur lorsque celui-ci doit entreprendre une action de reprise de commandes du véhicule (30), le véhicule (30) circulant alors dans un mode de conduite, appelé mode manuelle.

12. Système d'avertissement d'un conducteur d'un véhicule (30) selon la revendication précédente, **caractérisé en ce que** le dispositif d'avertissement (40 ; 50) est agencé pour transmettre ledit signal d'avertissement au conducteur lorsque le véhicule en mode autonome entre dans une zone interdisant la circulation de véhicule en mode autonome.

## Patentansprüche

1. System zur Warnung eines Fahrers eines Fahrzeugs (30) bezüglich eines Ereignisses in der Umgebung des Fahrzeugs, umfassend:
ein Detektionssystem (31; 32; 33), das geeignet ist, ein Ereignis zu detektieren, das in der Umgebung des Fahrzeugs (30) eintritt;
eine Warnvorrichtung (40; 50), die dazu bestimmt ist, vom Fahrer getragen zu werden und an das Detektionssystem (31; 32; 33) angeschlossen ist;
wobei die Warnvorrichtung (40; 50) dafür angeordnet ist, ein Warnsignal an den Fahrer zu übertragen, wenn ein Ereignis vom Detektionssystem (31; 32; 33) detektiert wird; **dadurch gekennzeichnet, dass** die Warnvorrichtung (40; 50) Mittel (70; 90) umfasst, die dafür angeordnet sind, umkehrbar an einem Gegenstand angebracht zu sein, der vom Fahrer getragen wird.

2. System zur Warnung eines Fahrers eines Fahrzeugs (30) nach dem vorhergehenden Anspruch, **dadurch gekennzeichnet, dass** die Warnvorrichtung (40; 50) eine Lichtquelle (42; 51, 52, 53a, 53b) umfasst, die dafür angeordnet ist, das Warnsignal in Form eines Lichtsignals zu übertragen, das für den Fahrer sichtbar ist.

3. System zur Warnung eines Fahrers eines Fahrzeugs (30) nach Anspruch 1, **dadurch gekennzeichnet, dass** die Warnvorrichtung (40; 50) einen Lautsprecher (54) umfasst, der dafür angeordnet ist, das Warnsignal in Form eines Tonsignals zu übertragen, das für den Fahrer hörbar ist.

4. System zur Warnung eines Fahrers eines Fahrzeugs (30) nach Anspruch 1, **dadurch gekennzeichnet, dass** die Warnvorrichtung (40; 50) geeignet ist, das Warnsignal in Form von Vibrationen zu übertragen, die für den Fahrer spürbar sind.

5. System zur Warnung eines Fahrers eines Fahrzeugs (30) nach einem der vorhergehenden Ansprüche, **dadurch gekennzeichnet, dass** die Warnvorrichtung (40; 50) dafür angeordnet ist, das Warnsignal während einer bestimmten Zeitdauer zu übertragen, wobei die bestimmte Zeitdauer der Zeit zwischen der Detektion des Ereignisses durch das Detektionssystem (31; 32; 33) und der Detektion eines Wegfalls oder einer Fortentwicklung des Ereignisses durch das Detektionssystem (31; 32; 33) entspricht.

6. System zur Warnung eines Fahrers eines Fahrzeugs (30) nach dem vorhergehenden Anspruch, **dadurch gekennzeichnet, dass** die Warnvorrichtung (40; 50) dafür angeordnet ist, die Eigenschaft(en) des Warnsignals über die vorbestimmte Zeitdauer je nach einer Detektion einer Fortentwicklung des Ereignisses im Verlauf der bestimmten Zeitdauer durch das Detektionssystem (31; 32; 33) zu ändern.

7. System zur Warnung eines Fahrers eines Fahrzeugs (30) nach einem der vorhergehenden Ansprüche, **dadurch gekennzeichnet, dass** die Warnvorrichtung (40; 50) dafür angeordnet ist, das Warnsignal an den Fahrer zu übertragen, wenn ein Ereignis vom Detektionssystem (31; 32; 33) detektiert wird, das die Aufmerksamkeit des Fahrers erfordert.

8. System zur Warnung eines Fahrers eines Fahrzeugs (30) nach dem vorhergehenden Anspruch, **dadurch gekennzeichnet, dass** die Warnvorrichtung (40; 50) dafür angeordnet ist, das Warnsignal an den Fahrer zu übertragen, wenn das Vorhandensein eines Fahrzeugs in einem Totwinkelbereich des Fahrers vom Detektionssystem (31; 32; 33) detektiert wird.

9. System zur Warnung eines Fahrers eines Fahrzeugs (30) nach dem vorhergehenden Anspruch, **dadurch gekennzeichnet, dass** die Warnvorrichtung (40; 50) dafür angeordnet ist, ein erstes bestimmtes Warnsignal zu übertragen, wenn das Detektionssystem (31; 32; 33) kein Fahrzeug im Totwinkelbereich des Fahrers detektiert, ein zweites bestimmtes Warnsignal zu übertragen, wenn das Detektionssystem (31; 32; 33) ein Fahrzeug in der Nähe des Totwinkelbereichs des Fahrers detektiert, ein drittes bestimmtes Warnsignal zu übertragen, wenn das Detektionssystem (31; 32; 33) ein Fahrzeug im Totwinkelbereich des Fahrers detektiert.

10. System zur Warnung eines Fahrers eines Fahrzeugs (30) nach Anspruch 7, **dadurch gekennzeichnet, dass** das Warnsignal an den Fahrer übertragen wird, wenn das Vorliegen einer Gefahr, einer Änderung der Fahrbedingungen, einer Verlangsamung des Verkehrs, eines Hindernisses auf der Strecke, einer Mautstation oder das Vorhandensein einer Ampel vom Detektionssystem (31; 32; 33) detektiert wird.

11. System zur Warnung eines Fahrers eines Fahrzeugs (30) nach Anspruch 7, **dadurch gekennzeichnet, dass** das Fahrzeug (30) mit einem System zur Analyse der Umgebung ausgerüstet ist, das dafür angeordnet ist, dass das Fahrzeug imstande ist, wenigstens teilweise ohne Handlung des Fahrers in einem Fahrmodus zu fahren, der autonomer Modus genannt wird, und dadurch, dass die Warnvorrichtung (40; 50) dafür angeordnet ist, das Warnsignal an den Fahrer zu übertragen, wenn dieser eine Handlung zur Wiederübernahme der Steuerung des Fahrzeugs (30) vornehmen soll, wobei das Fahrzeug (30) dann in einem Fahrmodus fährt, der manueller Modus genannt wird.

12. System zur Warnung eines Fahrers eines Fahrzeugs (30) nach dem vorhergehenden Anspruch, **dadurch gekennzeichnet, dass** die Warnvorrichtung (40; 50) dafür angeordnet ist, das Warnsignal an den Fahrer zu übertragen, wenn das Fahrzeug im autonomen Modus in einen Bereich hineinfährt, in dem das Fahren von Fahrzeugen im autonomen Modus untersagt ist.

## Claims

1. System for warning a driver of a vehicle (30) of an event in the surroundings of the vehicle, comprising:
a detection system (31; 32; 33) which is able to detect an event occurring in the surroundings of the vehicle (30);
a warning device (40; 50) intended to be worn by the driver and connected to the detection system (31; 32; 33);
the warning device (40; 50) being arranged to transmit a warning signal to the driver when an event is detected by the detection system (31; 32; 33); **characterized in that** the warning device (40; 50) comprises means (70; 90) arranged to be mounted, reversibly, on an object worn by the driver.

2. System for warning a driver of a vehicle (30) according to the preceding claim, **characterized in that** the warning device (40; 50) comprises a light source (42; 51, 52, 53a, 53b) arranged to transmit said warning signal in the form of a light signal which is visible to the driver.

3. System for warning a driver of a vehicle (30) according to Claim 1, **characterized in that** the warning device (40; 50) comprises a loudspeaker (54) arranged to transmit said warning signal in the form of a sound signal which is audible to the driver.

4. System for warning a driver of a vehicle (30) according to Claim 1, **characterized in that** the warning device (40; 50) is able to transmit said warning signal in the form of vibrations which are perceptible to the driver.

5. System for warning a driver of a vehicle (30) according to one of the preceding claims, **characterized in that** the warning device (40; 50) is arranged to transmit the warning signal for a defined period, said defined period corresponding to the time between the detection of the event by the detection system (31; 32; 33) and the detection of a disappearance of or of a change in said event by the detection system (31; 32; 33).

6. System for warning a driver of a vehicle (30) according to the preceding claim, **characterized in that** the warning device (40; 50) is arranged to modify the one or more characteristics of the warning signal during said predefined period depending on detection of a change in the event over the course of said defined period by the detection system (31; 32; 33).

7. System for warning a driver of a vehicle (30) according to one of the preceding claims, **characterized in that** the warning device (40; 50) is arranged to transmit said warning signal to the driver when an event requiring the attention of the driver is detected by the detection system (31; 32; 33) .

8. System for warning a driver of a vehicle (30) according to the preceding claim, **characterized in that** the warning device (40; 50) is arranged to transmit said warning signal to the driver when the presence of a vehicle in a blind spot of the driver is detected by the detection system (31; 32; 33).

9. System for warning a driver of a vehicle (30) according to the preceding claim, **characterized in that** the warning device (40; 50) is arranged to transmit a first warning signal given when the detection system (31; 32; 33) detects no vehicle in the blind spot of the driver, a second warning signal given when the detection system (31; 32; 33) detects a vehicle near to the blind spot of the driver, and a third warning signal given when the detection system (31; 32; 33) detects a vehicle in the blind spot of the driver.

10. System for warning a driver of a vehicle (30) according to Claim 7, **characterized in that** the warning signal is transmitted to the driver when the presence of a danger, a change in the driving conditions, a deceleration of the traffic, an obstacle on the road, a toll booth or the presence of a signalling light is detected by the detection system (31; 32; 33).

11. System for warning a driver of a vehicle (30) according to Claim 7, **characterized in that** the vehicle (30) is equipped with a system for analysing the surroundings arranged so that said vehicle is able to drive at least partially without action on the part of the driver in a driving mode called autonomous mode, and **in that** the warning device (40; 50) is arranged to transmit said warning signal to the driver when the latter must take action to retake control of the vehicle (30), the vehicle (30) then driving in a driving mode called manual mode.

12. System for warning a driver of a vehicle (30) according to the preceding claim, **characterized in that** the warning device (40; 50) is arranged to transmit said warning signal to the driver when the vehicle, in autonomous mode, enters an area in which vehicles driving in autonomous mode is prohibited.
